(19) Europäisches Patentamt

European Patent Office

Office européen des brevets

(11) Veröffentlichungsnummer: **0 516 195 A2**

(12) **EUROPÄISCHE PATENTANMELDUNG**

(21) Anmeldenummer: **92114364.0**

(22) Anmeldetag: **12.04.90**

(51) Int. Cl.⁵: **G05D 5/03**, B29C 47/92,
H01B 13/24

Diese Anmeldung is am 22 - 08 - 1992 als Teilanmeldung zu der unter INID-Kode 60 erwähnten Anmeldung eingereicht worden.

(30) Priorität: **31.05.89 DE 3917657**

(43) Veröffentlichungstag der Anmeldung:
**02.12.92 Patentblatt 92/49**

(60) Veröffentlichungsnummer der früheren
Anmeldung nach Art. 76 EPÜ: **0 400 310**

(84) Benannte Vertragsstaaten:
**AT CH DE FR GB IT LI SE**

(71) Anmelder: **SIKORA INDUSTRIEELEKTRONIK GMBH**
**Bruchweide 2**
**W-2800 Bremen 44(DE)**

(72) Erfinder: **Sikora, Harald**
**Griesborner Strasse 37**
**W-2800 Bremen(DE)**
Erfinder: **Gwinner, Ulrich, Dipl.-Ing.**
**Konrad-Adenauer-Allee 32**
**W-2800 Bremen 41(DE)**

(74) Vertreter: **Dipl.-Ing. H. Hauck, Dipl.-Ing. E. Graalfs, Dipl.-Ing. W. Wehnert, Dr.-Ing. W. Döring**
**Neuer Wall 41**
**W-2000 Hamburg 36(DE)**

(54) **Vorrichtung zur Regelung des Aussendurchmessers eines Stranges, insbesondere eines Kabels.**

㊼ Vorrichtung zur Regelung des Außendurchmessers eines Stranges, insbesondere eines Kabels oder dergleichen mit einer Meßvorrichtung zur Messung des Durchmessers des aus einem Extruder austretenden Stranges aus Kunststoff, deren Signal in einer Vergleichsvorrichtung mit einem Solldurchmesser verglichen wird und die ein Differenzsignal erzeugt, und einem das Differenzsignal erhaltenden Regler zur Regelung der Drehzahl des Extruders und/oder der Geschwindigkeit, mit der der Strang vom Extruder abgezogen wird, wobei dem Regler eine Rechenstufe vorgeschaltet ist, die ein mit dem jeweiligen Durchmessersignal moduliertes Vergleichssignal erzeugt, das auf den Regler gegeben wird.

Die Erfindung bezieht sich auf eine Vorrichtung zur Regelung des Außendurchmessers eines Stranges, insbesondere eines Kabels oder dergleichen nach dem Oberbegriff des Patentanspruchs 1.

Kabel werden üblicherweise in der Form hergestellt, daß der Leiter durch einen Extruder gezogen wird, der auf den Leiter eine Isolationsschicht aufbringt, die aus einem zur Vulkanisation oder Trokkenvernetzung geeigneten Material besteht. Nach dem Extrudieren wird das Kabel oder der Strang durch eine Vulkanisations- oder Trockenvernetzungsstrecke geleitet und anschließend gekühlt. Zum Beispiel aus Gründen der Isolationsfestigkeit muß der aufextrudierte Mantel eine Mindestdicke aufweisen. Andererseits wird aus Materialersparnisaber auch aus Gewichtsgründen der Durchmesser des Mantels nur so groß gewählt wie erforderlich. Daher ist es notwendig, den Durchmesser des Kabels oder Stranges ständig zu überwachen und eine entsprechende Regelung vorzunehmen, sollte er einen vorgegebenen Wert unter- oder überschreiten.

Es ist daher ein Erfordernis, den Kabeldurchmesser permanent zu messen. Der Durchmesser läßt sich ändern, indem die Abzugsgeschwindigkeit des Kabels und/oder die Drehzahl des Extruders verändert werden. Herkömmliche Regelvorrichtungen vergleichen den gemessenen Durchmesser mit dem Sollwert, bilden daraus die Soll/Istwert-Differenz, die dann einen Regler versorgt, der die Abzugsgeschwindigkeit der Linie oder die Drehzahl des Extruders verändert, bis der gewünschte Durchmesser erreicht ist. Bei einer geringen Totzeit der Regelstrecke, d.h. bei einem geringen Abstand zwischen dem Extruder und der Durchmessermeßvorrichtung kann das Regelverhalten für einen vorgegebenen Durchmesser optimal eingestellt werden. Nachteilig bei dieser herkömmlichen Regelung ist die Tatsache, daß der optimale Abgleich des Reglers nur für einen Durchmesser vorgenommen werden kann. Ist ein Kabel mit kleinerem Durchmesser zu fertigen, arbeitet die Regelung langsamer. Bei größeren Durchmessern arbeitet sie hingegen schneller und wird daher leicht instabil.

Der Erfindung liegt daher die Aufgabe zugrunde, eine Vorrichtung zu schaffen, mit der auf einfache und unaufwendige Weise der Durchmesser eines Kabels oder eines Stranges präzise auf vorgegebene Werte geregelt werden kann unabhängig von dem jeweils gewünschten Solldurchmesser.

Diese Aufgabe wird gelöst durch das Merkmal des Kennzeichnungsteils des Patentanspruchs 1.

Bei der erfindungsgemäßen Vorrichtung ist dem Regler eine Rechenstufe vorgeschaltet, die eine durchmesserabhängige Sollwert/Istwert-Differenz erzeugt.

Die Erfindung geht von der Erkenntnis aus, daß sich die normalerweise in einer Anlage produzierten Kabeldurchmesser in einem weiteren Bereich ändern als das Verhältnis des Durchmessers des Leiters zum Außendurchmesser. Es erweist sich daher für die Erzielung eines konstanten Regelverhaltens als zweckmäßig, als Korrekturgröße den relativen Durchmesserfehler zu verwenden. Mit Hilfe der erfindungsgemäßen Vorrichtung läßt sich daher für einen großen Durchmesserbereich ein insgesamt stabiles Regelverhalten erzeugen, damit das im wesentlichen durchmesserunabhängig ist. Es ist daher bei dem Betrieb einer Extruderanlage nicht mehr notwendig, bei dem Übergang zu einem anderen Außendurchmesser eines Kabels die Regelvorrichtung entsprechend anzupassen, was bei herkömmlichen Anlagen stets nur auf Erfahrungsbasis stattfand.

Die Erfindung wird nachfolgend anhand eines Ausführungsbeispieles näher beschrieben.

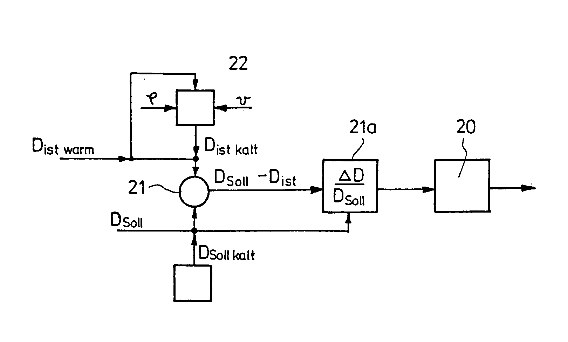

Die einzige Figur zeigt ein Blockschaltbild einer Regelungsvorrichtung nach der Erfindung.

Ein Regler 20 dient zur Regelung der Drehzahl des Extruders und/oder der Abzugsgeschwindigkeit des Kabels (im einzelnen nicht dargestellt). Eine Vergleichsvorrichtung 21 erhält einen Solldurchmesser $D_{Soll}$ und einen Istdurchmesser $D_{Ist\ Warm}$ von einer Meßvorrichtung. Das Differenzsignal $D_{Soll} - D_{Ist}$ wird auf eine Rechenstufe 21a gegeben, auf die auch der Durchmesserwert $D_{Soll}$ gegeben wird. Die Rechenstufe 21a errechnet aus dem Differenzsignal $D_{Soll} - D_{Ist} = \Delta D$ und dem Solldurchmesser das Verhältnis $\Delta D : D_{Soll}$. Dieses Signal wird auf den Regler 20 gegeben. Mithin wird die Differenz zwischen Ist- und Solldurchmesser in Abhängigkeit vom Durchmesser modifiziert und auf diese Weise in den Regler gegeben. Damit läßt sich unabhängig vom Außendurchmesser des Kabels 12 jeweils ein stabiles Regelverhalten erzielen. Statt des Durchmessers $D_{Soll}$ kann auch der Durchmesser $D_{Ist}$ auf die Rechenstufe 21 gegeben werden.

Alternativ zur beschriebenen Regelungsmethode oder auch zusätzlich kann eine zweite Rechenstufe 22 vorgesehen werden. In die Rechenstufe 22 wird ein Geschwindigkeitssignal v eingegeben, das zum Beispiel aus den Impulsen einer Längenmeßvorrichtung gewonnen wird. Zusätzlich wird in die Rechenstufe 22 ein Masseflußsignal $\phi$ eingegeben, das vom Extruder abgeleitet wird (im einzelnen nicht gezeigt). Der Massefluß bestimmt bei vorgegebenem Durchmesser des Leiters und vorgegebener Abzugsgeschwindigkeit die Querschnittsringfläche des auf dem Leiter sitzenden Mantels und damit auch seines Außendurchmessers. Schließlich wird in die Rechenstufe auch die Schrumpfung

$$\frac{1}{\rho_{\text{warm}}} - \frac{1}{\rho_{\text{kalt}}}$$

eingegeben. Aus den erwähnten Werten rechnet die Rechenstufe 22 den Warmdurchmesser in einen Kaltdurchmesser um, der in der Vergleichsvorrichtung 21 mit dem Kaltsolldurchmesser verglichen wird. Diese Regelungsmethode ermöglicht eine schnelle Regelung auf den tatsächlich zu erzielenden Kaltdurchmesser.

**Patentansprüche**

1. Vorrichtung zur Regelung des Außendurchmessers eines Stranges, insbesondere eines Kabels oder dergleichen mit einer Meßvorrichtung zur Messung des Durchmessers des aus einem Extruder austretenden Stranges aus Kunststoff, deren Signal in einer Vergleichsvorrichtung mit einem Solldurchmesser verglichen wird und die ein Differenzsignal erzeugt, und einem das Differenzsignal erhaltenden Regler zur Regelung der Drehzahl des Extruders und/oder der Geschwindigkeit, mit der der Strang vom Extruder abgezogen wird, dadurch gekennzeichnet, daß dem Regler (20) eine Rechenstufe (21a) vorgeschaltet ist, die ein mit dem jeweiligen Durchmessersignal moduliertes Vergleichssignal erzeugt, das auf den Regler (20) gegeben wird.

2. Vorrichtung nach Anspruch 1, dadurch gekennzeichnet,daß auf die Rechenstufe (21a) das Differenzsignal und das Durchmessersignal oder ein Solldurchmessersignal gegeben werden zur Bildung des Verhältnisses von Differenzsignal zu Istdurchmessersignal bzw. Solldurchmessersignal.